# EUROPÄISCHE PATENTANMELDUNG

(11) **EP 1 249 759 A1**
(43) Veröffentlichungstag der Anmeldung: **16.10.2002**
(21) Anmeldenummer: 02006864.9
(22) Anmeldetag: 26.03.2002
(51) Int. Cl.: G06F 11/26, G06F 11/36, G06F 11/00

(54) **Programmgesteuerte Einheit**

(30) Priorität: 04.04.2001 DE 10116862
(71) Anmelder: Infineon Technologies AG, 81669 München (DE)
(72) Erfinder: Barrenscheen, Jens, Dr., 81669 München (DE); Herz, Karl, 81735 München (DE)
(74) Vertreter: Repkow, Ines, Dr. Dipl.-Ing.

(57) **Zusammenfassung**

Es wird eine programmgesteuerte Einheit beschrieben, mit einer CPU, und mit einer Speichermanagementeinrichtung, welche auf Veranlassung durch die CPU von der CPU ausgegebene Daten in eine Speichereinrichtung schreibt, oder in der Speichereinrichtung gespeicherte Daten ausliest und an die CPU weiterleitet. Die beschriebene programmgesteuerte Einheit zeichnet sich dadurch aus, daß eine Steuereinrichtung vorgesehen ist, welche zumindest teilweise die Zeitpunkte vorgibt, zu welchen die Speichermanagementeinrichtung die zur Durchführung eines Datentransfers erforderlichen Aktionen vorzunehmen hat. Dadurch kann erreicht werden, daß sich die programmgesteuerte Einheit in Phasen, in welchen sie anstelle einer normalerweise verwendeten Speichereinrichtung eine andere Speichereinrichtung verwendet, ganz genau so verhält wie es der Fall wäre, wenn die programmgesteuerte Einheit gerade die normalerweise verwendete Speichereinrichtung verwenden würde.

## Beschreibung

Die vorliegende Erfindung betrifft eine Vorrichtung gemäß dem Oberbegriff des Patentanspruchs 1, d.h. eine programmgesteuerte Einheit, mit einer CPU, und mit einer Speichermanagementeinrichtung, welche auf Veranlassung durch die CPU von der CPU ausgegebene Daten in eine Speichereinrichtung schreibt, oder in der Speichereinrichtung gespeicherte Daten ausliest und an die CPU weiterleitet.

Bei der besagten programmgesteuerten Einheiten handelt es sich um einen Mikroprozessor, einen Mikrocontroller, einen Signalprozessor oder dergleichen. Solche programmgesteuerten Einheiten sind seit vielen Jahren in unzähligen Ausführungsformen bekannt und bedürfen keiner näheren Erläuterung.

Die erwähnte Speichermanagementeinrichtung nimmt der CPU die Aktionen ab, die durchzuführen sind, um Daten in eine Speichereinrichtung einzuschreiben oder Daten aus einer Speichereinrichtung auszulesen.

Die CPU wird dadurch insbesondere dann, wenn es sich um eine langsam arbeitende Speichereinrichtung handelt, spürbar entlastet. Sie muß der Speichermanagementeinrichtung nur
- die Information, ob Daten aus der Speichereinrichtung gelesen oder Daten in die Speichereinrichtung geschrieben werden sollen,
- die Adresse, auf die zugegriffen werden soll, und
- gegebenenfalls die zu speichernden Daten
übermitteln, und kann dann, ohne das Ende des Zugriffs abzuwarten, weiterarbeiten. Darüber hinaus muß sich die CPU auch nicht um die Besonderheiten kümmern, die bei einem Zugriff auf die Speichereinrichtung zu beachten sind. Es obliegt alleine der Speichermanagementeinrichtung,
- aus der Adresse die Speichereinrichtung zu ermitteln, auf welche zugegriffen werden soll (an der Speichermanagementeinrichtung können mehrere Speichereinrichtungen angeschlossen sein),
- an die betreffende Speichereinrichtung die Adresse auszugeben, von welcher Daten gelesen oder in welche Daten geschrieben werden sollen,
- die zu speichernden Daten auszugeben, bzw. die zu lesenden Daten abzuholen, und
- sofern Daten aus der Speichereinrichtung gelesen werden sollten, diese Daten an die CPU weiterzuleiten.

Das Vorsehen einer Speichermanagementeinrichtung erweist sich auch als vorteilhaft, wenn es sich bei der programmgesteuerten Einheit um eine in einem Emulator einsetzbare programmgesteuerte Einheit handelt, bei welcher während der Emulation anstelle der Speichereinrichtung, die im normalen Betrieb der programmgesteuerten Einheit verwendet wird, eine in der Regel als Overlay-Speicher bezeichnete andere Speichereinrichtung verwendet werden kann. Dann kann die Umschaltung von der normalerweise verwendeten Speichereinrichtung auf den Overlay-Speicher einfach dadurch erfolgen, daß in der Speichermanagementeinrichtung die Zuordnung geändert wird, durch welche festgelegt wird, auf welche Speichereinrichtung zugegriffen werden muß, um den von der CPU angeforderten Schreib- oder Lesevorgang auszuführen.

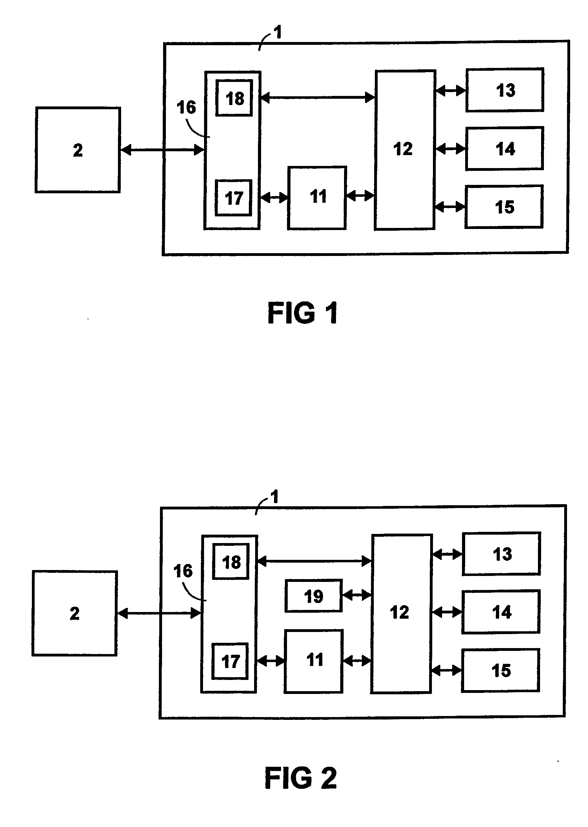

Der Aufbaus eines Emulators, bei welchem von dieser Möglichkeit Gebrauch gemacht werden kann, ist in Figur 1 gezeigt. Es sei bereits an dieser Stelle darauf hingewiesen, daß von der in der Figur 1 gezeigten Anordnung nur die vorliegend besonders interessierenden Komponenten des Emulators dargestellt sind.

Der Emulator enthält eine programmgesteuerte Einheit 1, und eine die Emulation steuernde Steuereinheit 2.

Die programmgesteuerte Einheit 1 enthält eine CPU 11, eine mit der CPU 10 verbundene Speichermanagementeinrichtung 12, mit der Speichermanagementeinrichtung 12 verbundene Speicher 13 bis 15, sowie mit der CPU 11, der Speichermanagementeinrichtung 12 und der Steuereinheit 2 verbundene Debug-Ressourcen 16.

Die Speicher 13 bis 15 sind im betrachteten Beispiel ein RAM (Speicher 13), ein ROM (Speicher 14), und ein Flash-Speicher (Speicher 15).

Die Debug-Ressourcen 16 enthalten eine Emulations-Steuereinrichtung 17, einen von der Steuereinheit 2 beschreibbaren Overlay-Speicher 18 und gegebenenfalls weitere Komponenten wie beispielsweise einen Monitor-Speicher, einen Trace-Speicher, etc.

Der Vollständigkeit halber sei angemerkt, daß die programmgesteuerte Einheit aus einem oder mehreren Halbleiter-Chips bestehen kann. Insbesondere können (müssen aber nicht) die Debug-Ressourcen 16 auf einem eigenen Halbleiter-Chip untergebracht sein; eine solche programmgesteuerte Einheit ist in der DE 197 432 64 A1 beschrieben.

Im normalen Betrieb der programmgesteuerte Einheit führt die CPU 11 ein im Flash-Speicher 15 gespeichertes Programm aus, wobei der Zugriff auf den Flash-Speicher auf die eingangs beschriebene Art und Weise über die Speichermanagementeinrichtung 12 erfolgt.

Während der Emulation der programmgesteuerten Einheit überwacht die Steuereinheit 2 im Zusammenwirken mit den Debug-Ressourcen 16 das Auftreten vorgebbarer Zustände oder Ereignisse, und reagiert auf eine ebenfalls vorgebbare Art und Weise auf das Auftreten des betreffenden Zustandes oder Ereignisses.

Die vorgebbaren Zustände oder Ereignisse bestehen beispielsweise darin, daß innerhalb oder außerhalb der programmgesteuerten Einheit bestimmte Daten, Adressen oder Steuersignale transferiert werden oder gespeichert sind.

Die vorgebbaren Reaktionen auf das Auftreten solcher oder anderer Zustände oder Ereignisse umfassen beispielsweise das Anhalten der programmgesteuerten Einheit, das Auslesen und/oder das Verändern der Inhalte von Registern oder internen oder externen Speichern, und/oder die Aufzeichnung und Auswertung der zuvor und/oder danach auftretenden Verläufe von interessierenden Daten, Adressen, Signalen, und/oder Register- und Speicherinhalten.

Als Reaktion auf das Auftreten eines bestimmten Zustandes oder Ereignisses, aber auch unabhängig hiervon kann durch die Steuereinheit 2 auch veranlaßt werden, daß die CPU 11 anstelle eines der Speicher 13 bis 15 den in den Debug-Ressourcen 16 enthaltenen Overlay-Speicher 18 verwendet. Im betrachteten Beispiel sei angenommen, daß anstelle des Flash-Speichers 15 der Overlay-Speicher 18 verwendet wird. In diesem Fall würde die CPU 11 anstelle des im Flash-Speicher 15 gespeicherten Programms ein im Overlay-Speicher 18 der Debug-Ressourcen 15 gespeichertes Programm ausführen. Die Umschaltung vom Flash-Speicher 15 auf den Overlay-Speicher erfolgt, wie vorstehend bereits erwähnt wurde, durch eine vom Emulator veranlaßte Änderung von Zuordnungen in der Speichermanagementeinrichtung 12. Die CPU 11 merkt von alledem nichts. Sie gibt die selben Adressen aus wie vorher und meint, ihr Programm vom Flash-Speicher 15 zu erhalten.

Es dürfte einleuchten und bedarf keiner näheren Erläuterung, daß das Ersetzen eines Speichers durch einen anderen Speicher vielfältige Möglichkeiten zum Erkennen und Lokalisieren von Fehlern in der programmgesteuerten Einheit, oder in mit der programmgesteuerten Einheit kooperierenden Einrichtungen, oder in dem von der programmgesteuerten Einheit ausgeführten Programm bietet.

Die Praxis zeigt allerdings, daß sich die programmgesteuerte Einheit bzw. das die programmgesteuerte Einheit enthaltende System während der Emulation mitunter anders verhält als es im normalen Betrieb der programmgesteuerten Einheit der Fall ist. Dies ist störend, weil es die Erkennung und Lokalisierung von Fehlern erschwert oder gänzlich unmöglich macht.

Der vorliegenden Erfindung liegt daher die Aufgabe zugrunde, die programmgesteuerte Einheit gemäß dem Oberbegriff des Patentanspruchs 1 derart weiterzubilden, daß sich die programmgesteuerte Einheit in Phasen, in welchen sie anstelle einer normalerweise verwendeten Speichereinrichtung eine andere Speichereinrichtung verwendet, ganz genau so verhält wie es der Fall wäre, wenn die programmgesteuerte Einheit gerade die normalerweise verwendete Speichereinrichtung verwenden würde.

Diese Aufgabe wird erfindungsgemäß durch die in Patentanspruch 1 beanspruchte programmgesteuerte Einheit gelöst.

Die erfindungsgemäße programmgesteuerte Einheit zeichnet sich dadurch aus, daß eine Steuereinrichtung vorgesehen ist, welche zumindest teilweise die Zeitpunkte vorgibt, zu welchen die Speichermanagementeinrichtung die zur Durchführung eines Datentransfers erforderlichen Aktionen vorzunehmen hat.

Dadurch kann erreicht werden, daß - abgesehen vom Inhalt der erhaltenen Daten - aus der Sicht der CPU kein Unterschied besteht, ob auf die normalerweise verwendete Speichereinrichtung oder auf eine andere Speichereinrichtung zugegriffen wird.

Abgesehen davon können dadurch die Zugriffe auf die Speichereinrichtung auch schneller erfolgen als es ohne die beanspruchte Steuereinrichtung der Fall ist. Es entfällt nämlich die Notwendigkeit, vor der Durchführung der jeweiligen Aktion von der Speichereinrichtung ausgegebene Signale abzuwarten und auszuwerten, durch welche die Speichereinrichtung signalisiert, daß sie zur Durchführung der betreffenden Aktion bereit ist.

Vorteilhafte Weiterbildungen der Erfindung sind den Unteransprüchen, der folgenden Beschreibung, und den Figuren entnehmbar.

Die Erfindung wird im folgenden unter Bezugnahme auf die Figuren anhand eines Ausführungsbeispiels beschrieben. Es zeigen
- Figur 1: eine eine herkömmliche programmgesteuerte Einheit enthaltende Anordnung, und
- Figur 2: eine die im folgenden beschriebene programmgesteuerte Einheit enthaltende Anordnung.

Die im folgenden beschriebene programmgesteuerte Einheit ist eine Weiterbildung der in der Figur 1 gezeigten und unter Bezugnahme darauf beschriebenen programmgesteuerte Einheit; identische oder einander entsprechende Komponenten sind mit den selben Bezugszeichen bezeichnet.

Die beschriebene programmgesteuerte Einheit unterscheidet sich von der in Figur 1 gezeigten programmgesteuerten Einheit dadurch, daß eine Steuereinrichtung vorgesehen ist, welche zumindest teilweise die Zeitpunkte vorgibt, zu welchen die Speichermanagementeinrichtung die zur Durchführung eines Datentransfers erforderlichen Aktionen vorzunehmen hat.

Diese Steuereinrichtung ist in der Figur 2 mit dem Bezugszeichen 19 bezeichnet. Die Steuereinrichtung 19 ist im betrachteten Beispiel eine separate Einheit in der programmgesteuerten Einheit; sie könnte aber auch Bestandteil der Speichermanagementeinrichtung 12 oder einer beliebigen anderen Komponente der programmgesteuerten Einheit sein.

Die Zeitpunkte, die die Steuereinrichtung 19 vorgibt, werden im allgemeinen die Zeitpunkte sein,
- zu welchen die Speichermanagementeinrichtung 12 eine Adresse an die anzusprechende Speichereinrichtung auszugeben hat,
- zu welchen die Speichermanagementeinrichtung 12 Steueroder Handshakesignale an die Speichereinrichtung auszugeben oder von der Speichereinrichtung entgegenzunehmen hat,
- zu welchen die Speichermanagementeinrichtung 12 die in der Speichereinrichtung zu speichernden Daten an die Speichereinrichtung auszugeben hat bzw. zu welchen die Speichermanagementeinrichtung 12 die aus der Speichereinrichtung auszulesenden Daten von der Speichereinrichtung abzuholen hat, und/oder
- zu welchem die Speichermanagementeinrichtung 12 aus der Speichereinrichtung ausgelesene Daten an die CPU 11 weitergibt.

Die Zeitpunkte welcher Aktionen die Steuereinrichtung vorgibt, hängt jedoch von der Art und Weise ab, auf welche die Speichermanagementeinrichtung mit der Speichereinrichtung kommunizieren muß, um Daten in diese einzuschreiben oder Daten aus dieser auszulesen. D.h., die Steuereinrichtung kann prinzipiell beliebig viele Zeitpunkte vorgeben, und zu den genannten Zeitpunkten beliebige Aktionen veranlassen. Wenn wie im betrachteten Beispiel mehrere Speichereinrichtungen (die Speicher 13 bis 15 und der Overlay-Speicher 18) angeschlossen sind, kann die Steuereinrichtung 19 abhängig von der gerade anzusprechenden Speichereinrichtung verschiedene Zeitpunkte vorgeben.

Im betrachteten Beispiel interessiert "nur" der Zugriff auf den Flash-Speicher 15 und auf den Overlay-Speicher 18.

Die Steuerung dieser Zugriffe erfolgt derart, daß der Zugriff auf den Flash-Speicher 15 und den Overlay-Speicher 18 aus der Sicht der CPU 11 exakt gleich erfolgen. Insbesondere wird durch die Steuereinrichtung 19 dafür gesorgt, daß Daten, die aus dem Overlay-Speicher 18 gelesen werden, von der Speichermanagementeinrichtung 12 genau zu dem Zeitpunkt an die CPU 11 ausgegeben werden wie es der Fall wäre, wenn die betreffenden Daten aus dem Flash-Speicher 15 gelesen worden wären.

Die Aktionen, die von der Speichermanagementeinrichtung 12 ausgeführt werden müssen, um Daten in die jeweiligen Speichereinrichtungen zu schreiben, oder um Daten aus den jeweiligen Speichereinrichtungen zu lesen, sowie die Zeitpunkte, zu welchen die einzelnen Aktionen durchzuführen sind, hängen von den verwendeten Speichereinrichtungen ab und können verschieden sein. Im betrachteten Beispiel sind deutliche Unterschiede vorhanden, denn der Overlay-Speicher 18 wird vorliegend durch ein RAM gebildet. Ob und gegebenenfalls welche Unterschiede hier beim Zugriff auf den Flash-Speicher 15 und auf den Overlay-Speicher 18 vorhanden sind, ist für die CPU 11 und ihr Verhalten ohne jede Bedeutung. Die CPU 11 merkt hiervon nichts, weil weder in der Art und Weise, in welcher die CPU 11 den Speicherzugriff veranlaßt, noch in der Art und Weise, auf welche der CPU 11 aus einer Speichereinrichtung ausgelesene Daten übermittelt werden, noch in den Zeitpunkten, zu welchen dies erfolgt, noch in den zeitlichen Abständen zwischen den einzelnen Vorgängen Unterschiede bestehen.

Dadurch verhält sich die CPU 11 im Fall, daß die von ihr angeforderten Datentransfers von bzw. zum Overlay-Speicher 18 erfolgen, exakt so, wie es der Fall wäre, wenn die angeforderten Datentransfers von bzw. zum Flash-Speicher 15 erfolgen würden.

Dies gilt auch dann,
- wenn die Speichereinrichtung auf verschiedenen Chips untergebracht sind, und/oder
- wenn auf die Speichereinrichtungen unter Verwendung unterschiedlicher Zugriffsmechanismen zugegriffen werden muß, und/oder
- wenn das Auslesen und/oder das Beschreiben einer der Speichereinrichtungen, beispielsweise des Flash-Speichers 15 über eine Pipeline erfolgt, und das Auslesen und/oder das Beschreiben der anderen Speichereinrichtung nicht über eine Pipeline oder eine andere Pipeline erfolgt.

Dadurch kann erreicht werden, daß sich die programmgesteuerte Einheit und das diese enthaltende System während der Emulation der programmgesteuerten Einheit exakt so verhalten wie es im normalen Betrieb der Fall ist.

Es dürfte einleuchten und bedarf keiner näheren Erläuterung, daß die Steuereinrichtung 19 auch dafür sorgen kann, daß sich das RAM 13 und der Overlay-Speicher 18 und/oder das das ROM 14 und der Overlay-Speicher 18 und/oder eine sonstige Speichereinrichtung und der Overlay-Speicher 18 aus der Sicht der CPU 11 identisch verhalten.

Der Umstand, daß die Steuereinrichtung 19 die Zeitpunkte vorgibt, zu welchen die Speichermanagementeinrichtung die zur Durchführung eines Datentransfers erforderlichen Aktionen vorzunehmen hat, läßt sich auch noch anderweitig vorteilhaft einsetzen. Dadurch entfällt nämlich zumindest teilweise die Notwendigkeit, daß die Speichermanagementeinrichtung und die Speichereinrichtung, auf welche zugegriffen werden soll, ein Handshake-Verfahren durchführen. Insbesondere besteht keine Notwendigkeit, daß die Speichermanagementeinrichtung 12 ein Ready-Signal abwartet und auswertet, durch welches ihr die angesprochene Speichereinrichtung signalisiert, daß die angeforderten Daten abgeholt werden können. Statt dessen kann die Steuereinrichtung 19 so eingestellt sein, daß sie den Beginn des Auslesens bereits vor dem Auftreten des Ready-Signals veranlaßt, wodurch mehr oder weniger zeitgleich mit der Ausgabe des Ready-Signals durch die Speichereinrichtung mit dem Lesen der angeforderten Daten begonnen werden kann. Welcher Zeitpunkt dies ist, hängt von der verwendeten Speichereinrichtung ab und kann in der Steuereinrichtung 19 eingestellt werden. Eine solche Vorgehensweise ermöglicht es, daß die aus der Speichereinrichtung angeforderten Daten früher aus der Speichereinrichtung abgeholt werden als es der Fall wäre, wenn das Auslesen der Daten nach dem Empfang und der Auswertung des Ready-Signals erfolgen würde.

Die Steuereinrichtung 19 ermöglicht auch maximal schnell aufeinanderfolgende Zugriffe auf Speichereinrichtungen, bei welchen bereits eine für den nächsten Zugriff geltende Adresse ausgegeben werden kann, bevor die im vorherigen Zugriff angeforderten Daten ausgegeben oder abgeholt wurden. Die Steuereinrichtung 19 muß hierfür "nur" dafür sorgen, daß die Ausgabe der Adressen für den nächsten Zugriff oder für weitere Zugriffe zum frühest möglichen Zeitpunkt erfolgt.

Das Vorsehen der Steuereinrichtung 19 erweist sich damit gleich in mehrfacher Hinsicht als vorteilhaft.

### Bezugszeichenliste

- 1: programmgesteuerte Einheit
- 2: Steuereinheit

- 11: CPU
- 12: Speichermanagementeinrichtung
- 13: RAM
- 14: ROM
- 15: Flash-Speicher
- 16: Debug-Ressourcen
- 17: Emulations-Steuereinrichtung
- 18: Overlay-Speicher
- 19: Steuereinrichtung

## Patentansprüche

1. Programmgesteuerte Einheit, mit einer CPU (11), und mit einer Speichermanagementeinrichtung (12), welche auf Veranlassung durch die CPU von der CPU ausgegebene Daten in eine Speichereinrichtung (13, 14, 15, 18) schreibt, oder in der Speichereinrichtung gespeicherte Daten ausliest und an die CPU weiterleitet,
**dadurch gekennzeichnet,**
**daß** eine Steuereinrichtung (19) vorgesehen ist, welche zumindest teilweise die Zeitpunkte vorgibt, zu welchen die Speichermanagementeinrichtung die zur Durchführung eines Datentransfers erforderlichen Aktionen vorzunehmen hat.

2. Programmgesteuerte Einheit nach Anspruch 1,
**dadurch gekennzeichnet,**
**daß** die Steuereinrichtung (19) den Zeitpunkt vorgibt, zu welchem die Speichermanagementeinrichtung (12) die Speichereinrichtung (13, 14, 15, 18) bei wiederholten Zugriffen auf dieselbe wieder adressieren kann.

3. Programmgesteuerte Einheit nach Anspruch 1 oder 2,
**dadurch gekennzeichnet,**
**daß** die Steuereinrichtung (19) den Zeitpunkt vorgibt, zu welchem die Speichermanagementeinrichtung (12) in die Speichereinrichtung (13, 14, 15, 18) einzuschreibende Daten an diese ausgeben kann.

4. Programmgesteuerte Einheit nach einem der vorhergehenden Ansprüche,
**dadurch gekennzeichnet,**
**daß** die Steuereinrichtung (19) den Zeitpunkt vorgibt, zu welchem die Speichermanagementeinrichtung (12) zuvor angeforderte Daten von der Speichereinrichtung (13, 14, 15, 18) abholen kann.

5. Programmgesteuerte Einheit nach einem der vorhergehenden Ansprüche,
**dadurch gekennzeichnet,**
**daß** die Steuereinrichtung (19) den Zeitpunkt vorgibt, zu welchem die Speichermanagementeinrichtung (12) aus der Speichereinrichtung (13, 14, 15, 18) ausgelesene Daten an die CPU (11) weiterleitet.

6. Programmgesteuerte Einheit nach Anspruch 5,
**dadurch gekennzeichnet,**
**daß** die Speichermanagementeinrichtung (12) die aus der Speichereinrichtung (13, 14, 15, 18) ausgelesenen Daten zumindest teilweise erst später an die CPU (11) weiterleitet als sie es tun könnte.

7. Programmgesteuerte Einheit nach einem der vorhergehenden Ansprüche,
**dadurch gekennzeichnet,**
**daß** die Festlegung der Zeitpunkte, zu welchen die Speichermanagementeinrichtung (12) die zur Durchführung eines Datentransfers erforderlichen Aktionen vorzunehmen hat, unabhängig von Steuersignalen erfolgt, die die Speichereinrichtung (13, 14, 15, 18) ausgibt, um zu signalisieren, daß nun eine bestimmte Aktion ausgeführt werden kann.

8. Programmgesteuerte Einheit nach einem der vorhergehenden Ansprüche,
**dadurch gekennzeichnet,**
**daß** die CPU (11) der Speichermanagementeinrichtung (12) mitteilt auf welche Speicheradresse der durchzuführende Speicherzugriff zu erfolgen hat.

9. Programmgesteuerte Einheit nach Anspruch 8,
**dadurch gekennzeichnet,**
**daß** an der Speichermanagementeinrichtung (12) mehrere Speichereinrichtungen (13, 14, 15, 18) angeschlossen sind, und daß die Speichermanagementeinrichtung eine Zuordnungsvorschrift enthält, durch welche abhängig von der der Speichermanagementeinrichtung von der CPU (11) zugeführten Adresse festgelegt wird, auf welche der Speichereinrichtungen die Speichermanagementeinrichtung zugreifen muß.

10. Programmgesteuerte Einheit nach Anspruch 9,
**dadurch gekennzeichnet,**
**daß** die Zuordnungsvorschrift veränderbar ist, so daß die Speichermanagementeinrichtung (12) auf eine andere Speichereinrichtung (13, 14, 15, 18) zugreift als es normalerweise der Fall ist.

11. Programmgesteuerte Einheit nach Anspruch 10,
**dadurch gekennzeichnet,**
**daß** die andere Speichereinrichtung (18) eine Speichereinrichtung ist, die andere Eigenschaften aufweist oder mit der anders kommuniziert werden muß als es bei der normalerweise verwendeten Speichereinrichtung (15) der Fall ist.

12. Programmgesteuerte Einheit nach Anspruch 10 oder 11,
**dadurch gekennzeichnet,**
**daß** die Steuereinrichtung (19) dafür sorgt, daß - abgesehen vom Inhalt der erhaltenen Daten - aus der Sicht der CPU (11) kein Unterschied besteht, ob auf die normalerweise verwendete Speichereinrichtung (15) oder auf die andere Speichereinrichtung (18) zugegriffen wird.

13. Programmgesteuerte Einheit nach Anspruch 12,
**dadurch gekennzeichnet,**
**daß** die Steuereinrichtung (19) dafür sorgt, daß aus der anderen Speichereinrichtung (18) ausgelesene Daten genau zu dem Zeitpunkt an die CPU (11) weitergeleitet werden wie es der Fall wäre, wenn die Daten aus der normalerweise verwendeten Speichereinrichtung (15) ausgelesen worden wären.

14. Programmgesteuerte Einheit nach Anspruch 10,
**dadurch gekennzeichnet,**
**daß** die Veränderung der Zuordnungsvorschrift auf Veranlassung durch einen an der programmgesteuerten Einheit (1) angeschlossenen Emulator (2) erfolgt.

15. Programmgesteuerte Einheit nach Anspruch 14,
**dadurch gekennzeichnet,**
**daß** die andere Speichereinrichtung (18), die auf die Veränderung der Zuordnungsvorschrift hin anstelle der normalerweise verwendeten Speichereinrichtung (15) verwendet wird, ein Overlay-Speicher ist, in welchem ein Programm gespeichert ist, das zu Emulationszwecken anstelle eines im normalerweise verwendeten Programmspeicher gespeicherten Programmes auszuführen ist.
